# EUROPÄISCHE PATENTANMELDUNG

(11) **EP 1 055 852 A2**
(43) Veröffentlichungstag der Anmeldung: **29.11.2000**
(21) Anmeldenummer: 00110301.9
(22) Anmeldetag: 13.05.2000
(51) Int. Cl.: F16K 31/06

(54) **Magnetventil**

(30) Priorität: 28.05.1999 DE 29909223 U
(71) Anmelder: LINDAUER DORNIER GESELLSCHAFT M.B.H, 88129 Lindau (DE)
(72) Erfinder: Schiller, Peter, 88131 Lindau (DE); Teufel, Dieter, 88085 Langenargen (DE)

(57) **Zusammenfassung**

Die Erfindung betrifft ein Magnetventil, insbesondere zur Verwendung in Luftdüsenwebmaschinen, mit einem Ventilgehäuse mit mindestens einem Ventileinlass und mindestens einem Ventilauslass, wobei im Durchlassbereich zwischen Ventileinlass und Ventilauslass ein elektromagnetisch betätigter Ventilkörper angeordnet ist. Um ein schnelles und fünktionssicheres Austauschen der dem Verschleiß unterliegenden Teile des Magnetventils zu ermöglichen, ist erfindungsgemäß vorgesehen, dass ein Befestigungsflansch (7), der Ventilkörper (6), Ventilkörper (12,13) sowie der elektromagnetische Antrieb (8) zusammen eine als technische Einheit ausgebildete erste Ventilbaugruppe (5) bilden, die dem Schnellwechsel unterliegt, und dass das Ventilgehäuse (1) mit seinen Anschlüssen (2,3,20) eine zweite Ventilbaugruppe bildet, die maschinenfest angeordnet ist.

## Beschreibung

Die Erfindung betrifft ein Magnetventil, insbesondere für den Einsatz in Webmaschinen. Derartige Magnetventile dienen z.B. in Luftdüsenwebmaschinen der Steuerung des pneumatischen Schussfadeneintragmediums zu den Haupt- und Hilfsblasdüsen.

Im einfachsten Fall besteht ein Magnetventil aus einem Ventilgehäuse, in welchem die Ventilkammer mit Ventileingang und Ventilausgang angeordnet ist. Im Schließzustand des Ventils sind Ventileingang und Ventilausgang durch einen auf einem Ventilsitz aufsitzenden Ventilteller voneinander getrennt. Der Ventilteller wird durch ein elektromagnetisch betätigtes Stellorgan angetrieben und lässt sich derart vom Ventilsitz abheben, dass der Durchgang zwischen Ventileingang und Ventilausgang freigegeben wird. Ventileingang und Ventilausgang sind mit Schlauch- oder Rohrleitungen zum Zuführen und Abführen eines Druckmediums verbunden. Der elektrische Anschluss für den elektromagnetischen Antrieb erfolgt über eine entsprechende Anschlussleitung.

Tritt bei einem derartigen Magnetventil ein Defekt auf, so war es bisher notwendig, entweder das gesamte Ventil auszutauschen oder zumindest das Ventil auszubauen, um die defekten Teile auswechseln zu können. Damit war der Nachteil verbunden, dass sowohl die Anschlüsse für das Druckmedium zum Ventileingang und Ventilausgang als auch die elektrische Anschlussleitung vor dem Ausbau des Ventils abgezogen werden mussten, was gerade bei schwer zugänglichen Einbaupositionen einen erheblichen Aufwand bedeutet. Bei Luftdüsenwebmaschinen ist es während des Webbetriebes gar nicht möglich, auf die der Ansteuerung der Hilfsblasdüsen dienenden Magnetventile zuzugreifen, weil diese durch die unmittelbar darüber laufende Gewebebahn verdeckt sind.

Ein weitere Nachteil besteht darin, dass beim Austausch von einzelnen Bauteilen, wie z.B. dem Ventilteller, die Einhaltung der vorgeschriebenen Toleranzen, wie z.B. Schaltzeiten, Ventilhub etc., nicht sichergestellt ist, wenn alte Teile mit neuen Austauschelementen gepaart werden.

Der Erfindung liegt die Aufgabe zugrunde, ein Magnetventil der eingangs genannten Art dahingehend zu verbessern, dass die dem Verschleiss unterliegenden Bauteile schnell gewechselt werden können.

Diese Aufgabe wird erfindungsgemäß durch die Merkmale des Anspruchs gelöst.

Die Erfindung beruht darauf, dass ein erster Ventilkörper dichtend in einem Hohlraum des Ventilgehäuses aufgenommen ist, wobei in den Hohlraum des Ventilgehäuses mindestens ein Eingang und ein Ausgang für ein Druckmedium mündet, die innerhalb des Ventilgehäuses gesteuert verbindbar sind.

Durch die im wesentlichen zweiteilige Ausbildung des Magnetventils, nämlich dem Ventilgehäuse, das die Anschlüsse zum Zu- bzw. Abführen des zu steuernden Druckmediums aufweist, dem im Ventilgehäuse angeordneten ersten Ventilkörper und zum anderen dem zweiten Ventilkörper, der die eigentlichen Ventilfunktionen ausführt, wird in vorteilhafter Weise erreicht, dass ein Auswechseln der Ventileinbauten ohne Abnehmen der Anschlüsse für das Druckmedium, wie z.B. Schläuche und Rohrleitungen, möglich ist.

Ein mit dem ersten Ventilkörper verbundener Befestigungsflansch liegt bei eingesetztem ersten und zweiten Ventilkörper am Ventilgehäuse an, wobei das Ventilgehäuse und der Befestigungsflansch mittels schnell lösbaren Befestigungsmitteln miteinander verbunden sind.

Der erste Ventilkörper, der Befestigungsflansch und der elektromagnetische Antrieb bilden in vorteilhafter Weise zusammen eine als Einheit austauschbare Ventilbaugruppe.

Zwischen dem ersten Ventilkörper und dem Ventilgehäuse sind Dichtungen angeordnet, die zum einen für eine Abdichtung der Ventilkammer nach außen sorgen und zum anderen den Einlass und den Auslass der Ventilkammer gegeneinander abdichten.

Eine leichte Austauschbarkeit der Ventilbaugruppe wird ferner dadurch unterstützt, dass an der Ventilbaugruppe ein Steckverbinder mit elektrischen Kontakten angeordnet ist, der mit einem am Ventilgehäuse angeordneten Gegenstück zusammenwirkt. Mit dem Einstecken der Ventilbaugruppe in das Ventilgehäuse wird gleichzeitig die elektrische Verbindung zum Antrieb des Ventils hergestellt.

Ein weiterer Vorteil der Erfindung liegt darin, dass ein schnelles und leichtes Austauschen der defekten Ventilbaugruppe möglich wird, indem die Schnellbefestigung zwischen der Ventilbaugruppe und dem Ventilgehäuse gelöst wird und die gesamte Ventilbaugruppe ausgetauscht werden kann, ohne dass eine aufwendige Demontage des Ventils notwendig ist. Beim Austausch der Ventilbaugruppe treten ferner keine losen Einzelteile auf, die u.U. verloren gehen können.

Ferner handelt es sich bei der Ventilbaugruppe um eine vorgeprüfte und funktionsfähige Einheit, so dass beim Austausch keine nachträgliche Prüfung der ausgetauschten Ventilbaugruppe notwendig ist. Es entfallen daher die Risiken von Toleranzunterschieden zwischen alten und neuen Teilen, die die Funktionstüchtigkeit des Ventils beeinträchtigen können.

Die Erfindung wird nachfolgend anhand eines Ausführungsbeispiels unter Bezugnahme auf die Zeichnungsfigur näher erläutert.

Die Zeichnungsfigur zeigt einen Halbschnitt durch das erfindungsgemäße Magnetventil.

Das Magnetventil ist im wesentlichen zweiteilig ausgebildet und umfasst zum einen ein Ventilgehäuse 1 mit einem einseitig offenen, etwa topfförmigen Hohlraum 4. In den Hohlraum 4 mündet ein Eingang 2, durch welchen ein Druckmedium zugeführt wird, sowie ein Ausgang 3 zum Abführen des Druckmediums. Das Druckmedium wird über nicht dargestellte Leitungen zu- bzw. abgeführt.

Das Ventilgehäuse 1 ist an einer Fläche 22 befestigt, die z.B. von der Wand des unterhalb der Webebene liegenden Drucklufttanks einer Luftdüsenwebmaschine gebildet wird.

Zum anderen umfasst das Magnetventil eine Ventilbaugruppe 5, im wesentlichen bestehend aus einem ersten Ventilkörper 6, der eine Ventilkammer 11 mit einem Einlass 10 und einem Auslass 17 für das Druckmedium ausbildet. Der Ventilkörper 6 ist einseitig an einem Befestigungsflansch 7 angeordnet, an den sich ein elektromagnetischer Antrieb 8 zur Betätigung des Ventilkörpers 12,13 anschließt.

Der Ventilkörper 12,13 ist nach außen abgedichtet in der Ventilkammer 11 geführt und umfasst einen Ventilschaft, an dessen Ende ein Ventilteller angeordnet ist. Der Ventilteller liegt im Schließzustand des Ventils dichtend an einem Ventilsitz 9 an, wobei der Einlass 10 vom Auslass 17 des Ventils getrennt wird. Ein Dämpfer 14 sorgt für eine Dämpfung des Ventiltelleranschlages bei geöffneter Ventilstellung.

Der erste Ventilkörper 6 ist erfindungsgemäß im Hohlraum 4 des Ventilgehäuses 1 aufgenommen, wobei der Einlass 10 des Ventilkörpers 6 über den Hohlraum 4 in Verbindung mit dem Eingang 2 des Ventilgehäuses 1 steht, und der Auslass 17 des Ventilkörpers 6 direkt mit dem Ausgang 3 des Ventilgehäuses 1 verbunden ist. Die Außenwand des Ventilkörpers 6 liegt an der Innenwand des Ventilgehäuses 1 an und ist nach außen mittels einer Dichtung 15 abgedichtet. Der Bereich zwischen Einlass 10 und Auslass 17 ist ebenfalls durch eine zwischen Außenwand des Ventilkörpers 6 und Innenwand des Ventilgehäuses 1 angeordneten Dichtung 16 abgedichtet.

Der Befestigungsflansch 7 der Ventilbaugruppe 5 liegt am Ventilgehäuse 1 an und wird z.B. mittels schnell lösbaren Schrauben 23 befestigt. Es kann aber auch jede andere schnell lösbare Befestigungsart Verwendung finden.

Zum Auswechseln der Ventilbaugruppe 5 müssen lediglich die Befestigungsschrauben 23 am Befestigungsflansch 7 gelöst werden, so dass die Ventilbaugruppe 5 aus dem Ventilgehäuse 1 entnommen werden kann. Davon bleiben die Anschlüsse für das Druckmedium, die sich am Ventilgehäuse 1 befinden, unbeeinflusst, d.h. diese müssen beim Austausch der Ventilbaugruppe 5 nicht abgenommen werden.

Ein Abziehen der elektrischen Anschlüsse für den Antrieb 8 des Ventils ist beim Austausch der Ventilbaugruppe 5 ebenfalls nicht erforderlich. Dies wird dadurch erreicht, dass zwischen Ventilbaugruppe 5 und Ventilgehäuse 1 ein Steckverbinder 18 angeordnet ist. Beim Einschieben der Ventilbaugruppe 5 in das Ventilgehäuse 1 gelangen an der Ventilbaugruppe 5 vorgesehene elektrische Kontakte 19 in Eingriff mit zugeordneten Kontaktbuchsen 20 und stellen so eine elektrische Verbindung zwischen Anschlussleitung 21 und elektromagnetischem Antrieb 8 her.

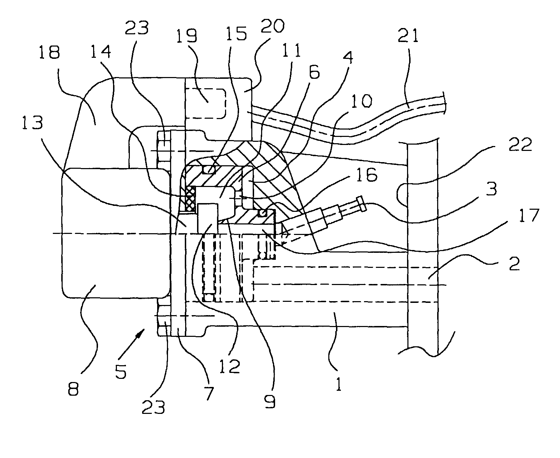

## Patentansprüche

1. Magnetventil, insbesondere zur Verwendung in Luftdüsenwebmaschinen, umfassend
- ein Ventilgehäus (1) mit einem Fluideinlass (2), einem Fluidauslass (3) und mit elektrischen Kontaktbuchsen (20),
- einen im Ventilgehäuse (1) angeordneten ersten Ventilkörper (6), der einen zuflussseitigen Hohlraum (4) des Ventilgehäuses (1) mittels eines im Ventilkörper (6) integrierten Einlass (10) mit einer abflussseitigen Ventilkammer (11) verbindet, und zweite Ventilkörper (12,13) zur Steuerung eines Fluidstromes zwischen der Ventilkammer (11) und einem koaxialen Auslass (17) im Ventilkörper (6),
- einen mit dem Ventilgehäuse (1) schnellverbindbaren Befestigungsflansch (7), der dem Ventilgehäuse (1) zugewandt den ersten Ventilkörper (6) trägt und der dem Ventilgehäuse (1) abgewandt einen elektromagnetischen Antrieb (8) trägt, wobei der Antrieb (8) elektrische Kontaktelemente (18,19) zur Schnellverbindung mit den elektrischen Kontaktbuchsen (20) besitzt, **dadurch gekennzeichnet,** dass der Befestigungsflansch (7), der erste Ventilkörper (6) und die zweiten Ventilkörper (12,13) sowie der elektromagnetische Antrieb (8) zusammen eine als technische Einheit ausgebildete erste Ventilbaugruppe (5) bilden, die dem Schnellwechsel unterliegt, und dass das Ventilgehäuse (1) mit seinen Anschlüssen (2,3,20) eine zweite Ventilbaugruppe bildet, die maschinenfest angeordnet ist.
